# EUROPEAN PATENT APPLICATION

(11) **EP 2 275 612 A2**
(43) Date of publication of application: **19.01.2011**
(21) Application number: 10006937.6
(22) Date of filing: 06.07.2010
(51) Int. Cl.: E04B 2/56, E04C 2/54

(54) **Modular vertical walls made of extruded PVC**

(30) Priority: 08.07.2009 BR MU8901471 U
(71) Applicant: Wittitz, Sandro Roberto, Costa E Silva Joinville SC (BR); Hinz, Helmuth, A Xaxim Curitiba PR (BR); Fernandes, Gilberto, Boa Vista, Joinville SC (BR); Schmoeller, Ederson, Nova Brasilia, Joinville SC (BR)
(72) Inventor: Wittitz, Sandro Roberto, Costa E Silva Joinville SC (BR); Hinz, Helmuth, A Xaxim Curitiba PR (BR); Fernandes, Gilberto, Boa Vista, Joinville SC (BR); Schmoeller, Ederson, Nova Brasilia, Joinville SC (BR)
(74) Representative: Lorente Berges, Ana

(57) **Abstract**

The present patent application for a utility model discloses "enhancements introduced in a profile integrated constructive system for modular vertical walls made of extruded PVC" which basic principle is to provide the formation of an optimized constructive system, in a unique and specific modular structure based on specific plates with hybrid composition in direct substitution to the traditional conventional walls. The innovation of the system is the use of modular profiles (A-O) with a wide range of measurements and sizes, made by the process of extrusion and co-extrusion, presenting a modular system with high performance, liable to expansion, with no need of additional structures, profiles made with standard and/or special rays offering more freedom to the shape of projects and thus a flexible system perfectly adapted to other product lines and increasing the number of options with the high number of available profiles and accessories, including a series of different elements with mechanical configuration variations, keeping the technical, functional and embodiment unity of the system.

## Description

### Technical Field: State of the art - mention of the patent document

The present patent application for a utility model refers to technical enhancements as applied to constructive systems in general, classified as wall structures, concerning isolation and/or joints which are especially adapted to walls constructed by molding. It particularly originates from the patent PI 0604170-1, covering one single main model in a unique and specific modular structure, based on specific plates with hybrid composition in direct substitution to the traditional divisional walls and façades, including a series of unique elements with mechanical configuration variations, i. e. with better functional skills characterizing the "enhancements introduced in a profile integrated constructive system for modular vertical walls made of extruded PVC" which, according to their general features, bring in comfort and efficacy to the constructive procedures for buildings in general, being different from the existent models and bringing in conditions to deserve the protection as claimed, by keeping the technical, functional and embodiment unity of the system.

### Summary of the Invention:

The patent application at issue is characterized by joining new components and processes allowing all operations to work and various fittings in the system, i. e. profiles of extruded PVC, for buildings in general, with wider coverage, perfectly integrated and symmetrically located in various elements, alternating a set of components which are connected to each other, so to provide advantages and improvements to the application of models for divisional systems for houses, which general features are different from other forms and models as widely known by the current state of the art.

### Background of the Invention: problems as found in the state of the art.

Current enhancements as used to construct buildings in modules in general are based on the current operation of the system, wherein the need for constructive changes has been noticed, also joining together elements and processes in a different conception, however not reaching a high grade of sophistication and complexity.

Initially, the integrated structural profile system (*patents PI 9306450-0, PI 94066665-5 and PI 9507783-9)* had been developed to overcome problems in the assembly of resistant structures at low cost, especially low-cost houses, but, in that working range, said extruded components are limited to panels and connectors of given standards, i. e. classified as modules with small variations.

### Solution of the present invention:

The innovation of the system is the use of modular profiles with various sizes and measurements, made by the process of extrusion and co-extrusion, wherein said profiles are vertically fitted in, besides facilitating the inclusion of armatures, both vertical and horizontal. The versatility of the system also allows electric, telephone, water, sewage and gas pipes to be installed, integrated to air devices, so to adapt themselves to the resistant properties of the walls. The constructive system is competitive and also presents a much higher cost-benefit ratio than traditional constructive systems at longer terms, thus bringing in important benefits which may be adapted to any architectural project; enlargements are possible, with items selected as per the criteria and/or requirements of their installation for the perfect operation of the equipment, thus facilitating the skills with consequent reduction of labor hours and professional work, besides increasing safety and avoiding time-consuming procedures for the application of conventional systems, not requiring big, difficult and costly adaptations.

### Advantage of the invention, description of the invention, novelty and effect:

Therefore, to guarantee the innovation, the system counts on a wide range of advantages, particularly concerning constructive procedures for similar purposes. These include: Modular system with high performance, liable to expansion with no need of additional structures, profiles made with standard and/or special rays offering better freeness in the shape of the projects, and finally a flexible system perfectly adapted to other product lines increasing the number of options with the high quantity of available profiles and accessories.

Defined from its operational development, this system will therefore develop added features to its characteristics and applications, as specifically presented herein:
- higher speed in construction;
- simpler assembly;
- cleaning and aesthetics;
- lack of maintenance and pathologies;
- product quality;
- durability;
- easy hand work;
- easily adapted to any project;
- excellent level of thermal and acoustic isolation;
- national and international certificates and approvals;
- production as per the regulations of the Brazilian Association of Technical Standards ABNT;
- considerable reduction of additional construction costs;
- low incidence of indirect costs:
- competitive direct cost; and
- fully anti-flame (classified as a Class A material).

Jointly, said attributes allow a fully industrialized operation which is compatible with any project.

### Brief description of figures:

Objects, advantages and further important characteristics of the patent application for a utility model at issue can be more easily understood when read jointly with the attached figures, wherein:
Figure 1 shows an upper view of MODULE "I" 200/80;
Figure 2 shows an upper view of MODULE "L";
Figure 3 shows an upper view of MODULE "U" FLOOR;
Figure 4 shows an upper view of MODULE "L" PIN.
Figure 5 shows an upper view of MODULE "T".
Figure 6 shows an upper view of MODULE "I" 80;
Figure 7 shows an upper view of the SPECIAL MODULE;
Figure 8 shows an upper view of the SPECIAL MODULE CAP;
Figure 9 shows an upper view of the MULTIFUNCIONAL MODULE;
Figure 10 shows an upper view of the FINISHING MODULE;
Figure 11 shows an upper view of the SPECIAL MODULE INTERNAL CAP;
Figure 12 shows an upper view of the GUTTER MODULE;
Figure 13 shows an upper view of MODULE "U";
Figure 14 shows an upper view of the COVER CORNER MODULE; and
Figure 15 shows an upper view of the COUPLING PROFILE.

### Details of the invention:

The objects, features and advantages will become clearer after the description that follows. This will be presented with the support of the figures to be shown just as examples to illustrate possible methods for the implementation and operation of the technical improvements. As such, the innovation, including the method and device of its implementation, allows the system as duly integrated to follow the timeline below.

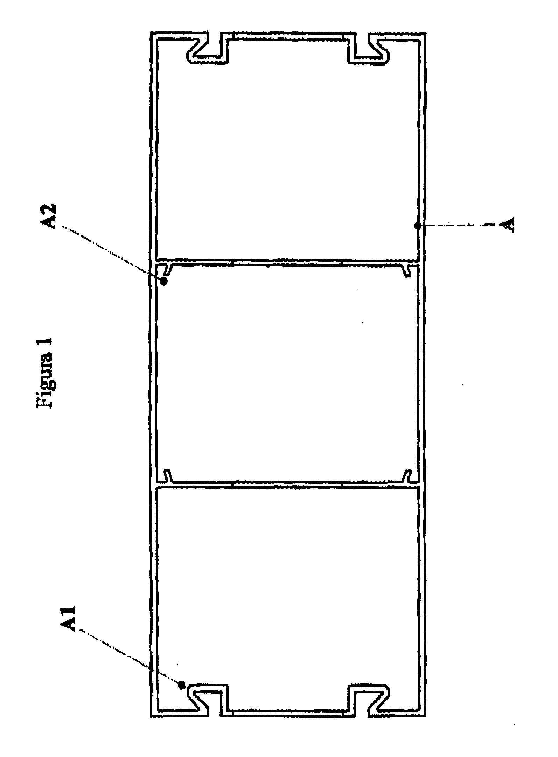

Figure 1 comprises module "I" 200/80 (A) enabling better representation in the constructive structure, wherein the notch (A1) represents details of fitting between the modules and, in the center, the peak (A2) with general shapes in angles serves as a guide to fit the gutter module "L".

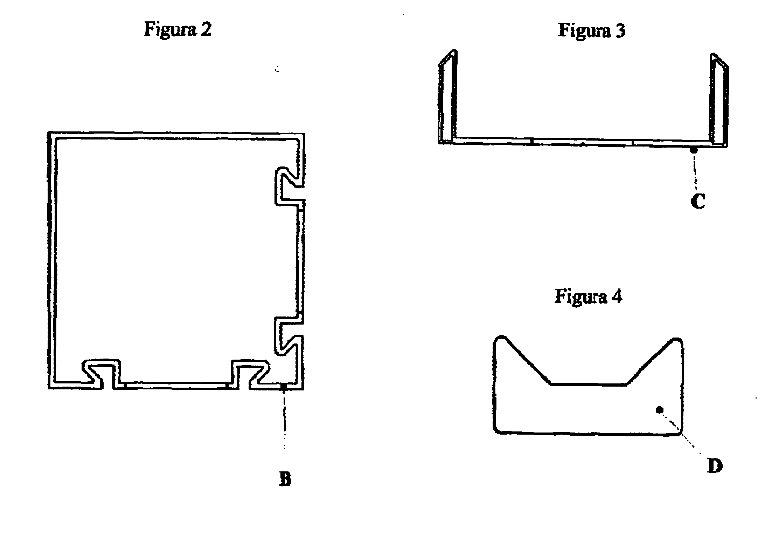

Figure 2 comprises the module "L" (B) enabling to join between the edges of the constructive structure.
Figure 3 comprises the module "U" floor (C) enabling perfect linearity in the assembly of structural modules of the building and also serves for finishing between the floor and the walls of the structure.
Figure 4 comprises the pin module (D) enabling the link between one module and the other.

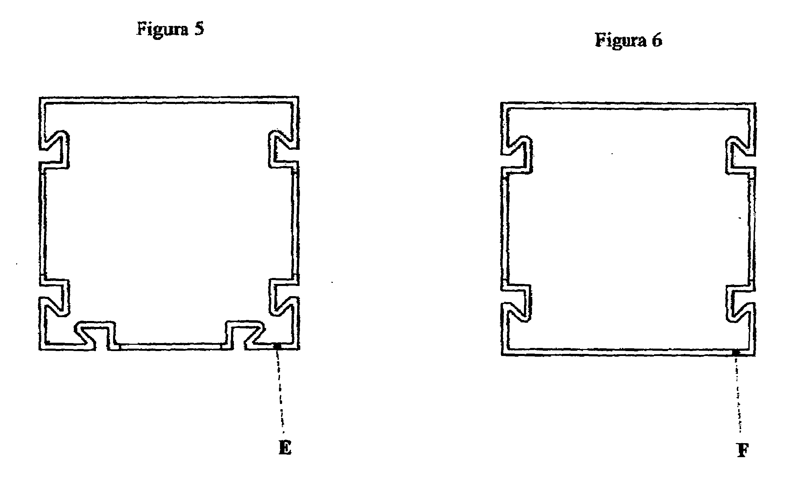

Figure 5 comprises module "T" (E) enabling the possibility of derivations as divisional walls between the environments of the building structure.
Figure 6 comprises module "I" 80 (F) enabling the division of the building structure into modules, wherein the dimensional closure of the building structure is required.

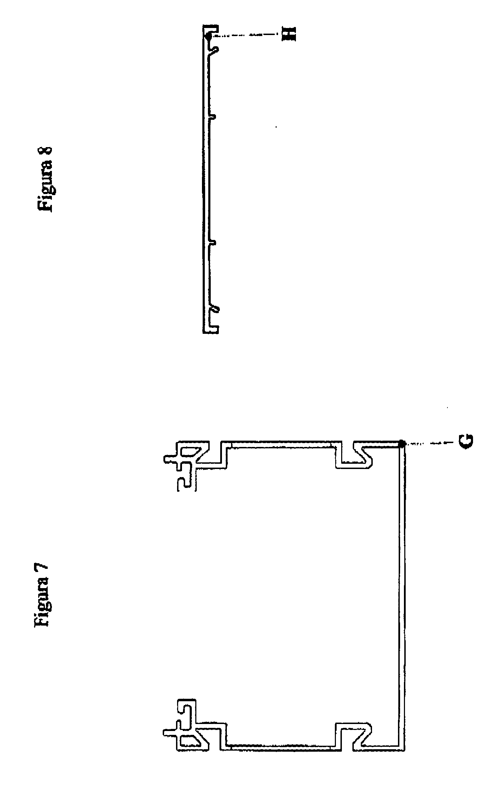

Figure 7 comprises the special module (G) enabling the possibility to assemble water, sewage and gas pipes, also serving for the division of the building structure into modules, wherein the dimensional closure of the building structure is required.
Figure 8 comprises the special cap module (H) enabling its easy removal in case of need for the maintenance of water, sewage and gas pipes.

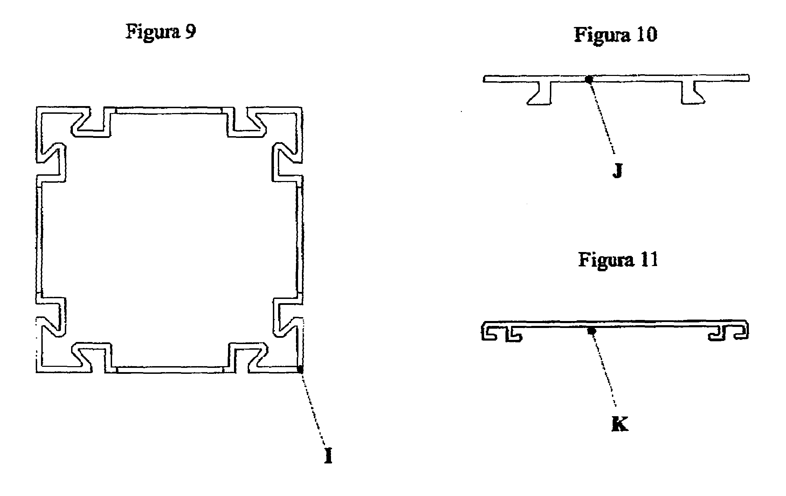

Figure 9 comprises the multifunctional module (I) enabling the possibility to substitute module "L" (B), module "T" (E) and module "I" 80 (F) at any point of the building structure, thus allowing future enlargements of the building structure with the simple removal of the finishing module (J).
Figure 10 comprises the finishing module (J) enabling finishing when the multifunctional module (I) is used in substitution to modules "L" (B), "T" (E) and "I" 80 (F).
Figure 11 comprises the internal cap special module (K) enabling the structure of the special module (G) at the concrete stage of the building structure.

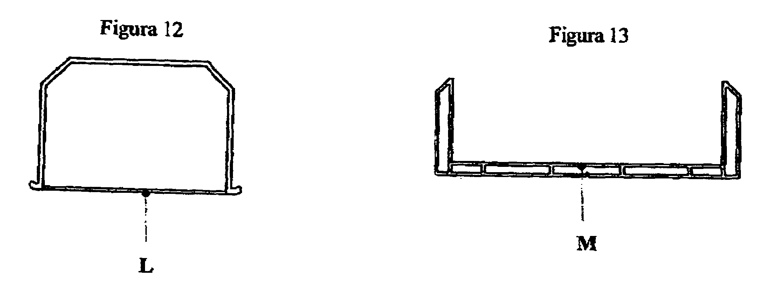

Figure 12 comprises the gutter module (L) enabling the possibility to pass electrical, telephone and cable TV cables at any point of the building structure when fitted into module "I" 200/80 (A) or into the special module (G).
Figure 13 comprises module "U" (M) enabling frames to be made to assemble doors and windows at the building structure.

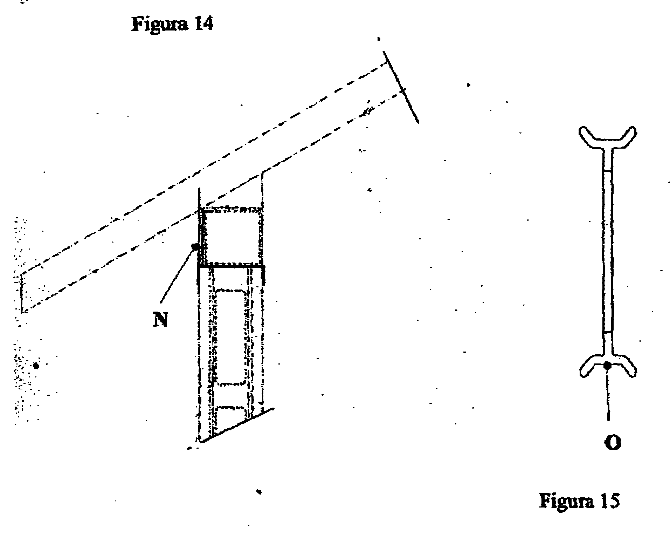

Figure 14 comprises the cover corner module (N) enabling perfect finishing between the structure walls of the building and the covering structure.
Figure 15 comprises the coupling profile module (O) enabling the link between the modules, being another option in substitution to the pin module "D".

Since the structures of each profile are made of PVC material, or vinyl polychloride and carbonates or similar with the same or similar lightness and resistance, framed by plastic, metal or similar material with the same or similar lightness and resistance, and structured by metal material or concrete with the same or similar lightness and resistance, the "enhancements introduced in a profile integrated constructive system for modular vertical walls made of extruded PVC" in general and consequently their modules are fully water-proof, do not get rusted, have very high durability and resistance against the direct action of a wide range of physical, chemical and weather agents, have very low specific weight, are fully acoustic and thermal, offer great safety to users and, when generally used in buildings and similar in general, do not offer any risk, both for the users as well as for its structure, being more practical in logistics.

### Conclusion:

For all the above, the "enhancements introduced in a profile integrated constructive system for modular vertical walls made of extruded PVC" present better and quicker performance in their application due to their general embodiment, low time of operation and capacity to perform the job according to the requirements of the field of construction of buildings in general, thus creating sustainability indicators, although measurements, sizes and quantities may vary according to general application requirements.

## Claims

1. "Enhancements introduced in a profile integrated constructive system for modular vertical walls made of extruded PVC", **characterized by** being a unique and specific modular structure with internal and external shapes and dispositions allowing the perfect location over the module "I" 200/80 (A), enabling better representation in the building structure wherein the corner (A1) represents the detail of fitting between the modules, in the central part, the peak (A2) with general shape in angle serves as a guide to fit the gutter module "L", module "L" (B) enabling to join the edges of the building structure, the floor module "U" (C) enabling the perfect linearity in module assembly at the building structure and also serving as finishing between the floor and the walls of the structure, the pin module (D) enabling to join one module to the other, module "T" (E) enabling the possibility of derivation as divisional walls between the environments of the building structure, module "I" 80 (F) enabling the division of the building structure into modules, wherein the dimensional closure of the building structure is required, the special module (G) enabling the possibility to assemble water, sewage and gas pipes; also serving for the division into modules of the building structure wherein the dimensional closure of the building structure is required, the special cap module (H) enabling its easy removal in case of need for maintenance of water, sewage and gas pipes, the multifunctional module (I) enabling the possibility to substitute module "L" (B), module "T" (E), module "I" 80 (F) at any point of the building structure, thus allowing future enlargements of the building structure, with the simple removal of the finishing module (J), finishing module (J) enabling finishing during the use of the multifunctional module (I) in substitution to module "L" (B), "T" (E) and "I" 80 (F), the special internal cap module (K) enabling to structure the special module (G) in the stage of concrete of the building structure, the gutter module (L) enabling the possibility to pass electrical, telephone and cable TV cables at any point of the building structure when fitted into module "I" 200/80 (A) or in the special module (G), module "U" (M) enabling frames to be made to assemble doors and windows at the building structure, the cover corner module (N) enabling perfect finishing between the walls of the building structure and the coverage structure, the coupling profile module (O) enabling to join the modules, being another option in substitution to the pin module "D".
